# EUROPEAN PATENT APPLICATION

(11) **EP 4 811 575 A1**
(43) Date of publication of application: **23.09.2026**
(21) Application number: 25165327.5
(22) Date of filing: 21.03.2025
(51) Int. Cl.: H02G 3/04, B60L 53/30, H02G 11/00

(54) **ELECTRIC VEHICLE CHARGING STATION HAVING A CONNECTOR HOLDER AND A METHOD FOR CHARGING AN ELECTRIC BATTERY OF AN ELECTRIC VEHICLE**

(71) Applicant: ABB E-mobility B.V., 2629 JG Delft (NL)
(72) Inventor: Picard, Luc, 1930 Zaventem (BE)
(74) Representative: Zimmermann & Partner Patentanwälte mbB

(57) **Abstract**

An electric vehicle charging station for charging an electric battery of an electric vehicle includes a charging cable (130) having a charging connector (140) at one end (131) of the charging cable (130) and a fixing point (132) spaced from the one end (131) of the charging cable (130). The charging cable (130) has a given stiffness and forms a predefined bend between the fixing point (132) and the one end (131). The charging station further includes a support device (110) having a fastening (120) fixing the charging cable (130) at the fixing point (132) in a given position so that the charging connector (140) is in a predetermined charging position which facilitates insertion of the charging connector (140) into the charging socket of an electric vehicle, and a connector holder (150) for receiving the charging connector (140) when the charging connector (140) is in a parking position. The charging connector (140) is movable from the charging position into the parking position by a pivoting movement which causes a torsion of the charging cable (130) bringing the charging connector (140) in an inclined orientation (142) relative to a normal orientation (141) of the charging connector (140) in the charging position. The connector holder (150) is configured to receive the charging connector (140) in the inclined orientation (142).

## Description

### BACKGROUND

The field of the disclosure relates to an electric vehicle charging station for charging an electric battery of an electric vehicle and in particular to an electric vehicle charging station having a connector holder which facilitates handling of a charging cable.

The transformation of public, commercial and private transport to environmentally friendly propulsion systems is one of the major challenges facing society today. Among other things, electric vehicles are becoming increasingly popular because electric drives are compact, reliable and easy to control. One obstacle to the acceptance of electric vehicles is the availability of charging stations and their ease of use. This is particularly important for larger electric vehicles such as trucks used for commercial transport.

Truck drivers are often under time pressure and need to charge their electric vehicles quickly. In order to reduce the charging time, high-power charging systems have been developed for DC charging of large electric vehicle batteries with power ratings of up to several megawatts. To reduce electrical losses during charging, the length of the electrical charging cable is kept as short as possible, while the cross-section of each wire is made as large as possible. As a result, the charging cable is heavy, relatively stiff and difficult to handle. In addition, charging cables can have built-in cooling to prevent the charging cables from heating up during high-power charging. The integrated cooling further increases the stiffness of the charging cable. As a result, considerable strength is required to move the cable and to insert the charging cable connector into the vehicle's charging socket.

After charging, for safety reasons, the connector must be placed in a holder to prevent the charging cable from moving freely and to prevent the electrical pins of the charging connector from becoming soiled. When the charging cable is moved, for example by rotating it about a vertical axis to move the connector from the vehicle to the charging station, a high torsional load may be generated along the length of the charging cable resulting in rotation of the connector, which rotation must be compensated for by the driver when inserting the connector into the holder.

Document DE 10 2018 112 746 A1 intends to address this problem by providing a charging station with a holder into which the connector is hooked without having to rotate the cable when moving between the vehicle and the charging station. When the charging cable is moved to the charging station, the connector remains facing the vehicle and the cable will only be bent.

A similar attempt to address the above problem is described in WO 2022/005281 A1, which pertains to a device for positioning a charger connector comprising a suspension for a charging cable. The connector is hold by a manipulator to manipulate the position and/or the orientation of the charger connector relative to the fixed world.

### BRIEF DESCRIPTION

In light of the above, an electric vehicle charging station according to claim 1 is provided. Furthermore, a method for charging an electric battery of an electric vehicle by using an electric vehicle charging station according to claim 15 is provided. Further aspects, advantages, and features are apparent from the dependent claims, the description, and the accompanying drawings.

According to an embodiment of the present disclosure, an electric vehicle charging station for charging an electric battery of an electric vehicle includes a charging cable having a charging connector at one end of the charging cable and a fixing point spaced from the one end of the charging cable. The charging connector is configured for mating with a charging socket of an electric vehicle. The charging cable has a given stiffness and forms a predefined bend between the fixing point and the one end. The electric vehicle charging station further includes a support device having a fastening which fixes the charging cable at the fixing point in a given position so that, under the influence of the gravity and together with the predefined bend and the given stiffness, the charging connector is in a predetermined charging position which facilitates insertion of the charging connector into the charging socket of an electric vehicle. The electric vehicle charging station further includes a connector holder for receiving the charging connector when the charging connector is in a parking position. The charging connector is movable from the charging position into the parking position by a pivoting movement which causes a torsion of the charging cable bringing the charging connector in an inclined orientation relative to a normal orientation of the charging connector in the charging position, wherein the connector holder is configured to receive the charging connector in the inclined orientation.

The charging cable is suspended or attached at the fixing point which is spaced, or remote, from the one end of the charging cable where the charging connector is connected to the charging cable. The distance, along the extension of the charging cable, between the fixing point and the one end defines a free length of the charging cable.

The charging connector, together with the one end of the charging cable, is freely movable relative to the fixing point, which fixing point is fixed in a given position defined by the fastening of the support device. The movability of the charging connector relative to the fixing point is not restricted by any further fastening of the support device. Thus, the amount to which the charging cable can be moved is only limited by the free length of the charging cable between the fixing point and the one end of the charging cable, the stiffness of the charging cable and the predefined bend of the charging cable.

For example, the charging cable may be suspended at its "top" end such that it is only supported at its fixing point and hangs down. The thus suspended charging cable may form a "J" shape, with the charging connector located at the one end (free end) of the charging cable, such that the charging connector is held by the charging cable, under the influence of the gravity together with the predefined bend and stiffness, at a level above the ground which level corresponds approximately to the level of the charging socket of an electrical vehicle. In the charging position, the charging connector points towards the electric vehicle, and is typically not inclined relative to the horizontal (grounds). The driver then only needs to grasp the charging connector and move it towards the charging socket without significantly lifting or rotating the charging connector and the heavy charging cable. The charging cable may be suspended such that its lowest point, where the predefined bend is formed, is above the ground. In the charging position, the driver can easily hold the heavy charging cable by grasping the charging connector.

Instead of a "J"-shape, the charging cable may assume a "U"-shape. Typically, the predefined shape includes, from the fixing point, a downwardly extending cable portion which transits into a bent cable portion and into an upwardly or horizontally extending cable portion before reaching the one (free) end.

The bent cable portion may be considered to form a part of a winding. The charging cable may have a winding of at least 60°, more preferably of at least 90°, and more preferably of at least 120°. A complete winding would have 360°. Typically, the winding is not more than 180°.

The predefined shape, which the charging cable assumes in the charging position, may be regarded as the "natural" shape of the charging cable, which is defined, under the influence of the gravity, by the location of the fixing point in space, the predefined bend of the charging cable and the stiffness with which the charging cable is provided. As the charging cable, including the charging connector, "hangs" under its own weight, only the force of gravity acts on the charging cable, with the counterforce being generated by the internal tension under which the charging cable is.

The design and shape of the charging socket and the charging connector, respectively, is typically standardized. An example of such a standard is MCS (Megawatt Charging System) developed to standardize charging infrastructure for high power charging. MCS charging connectors are designed for a rated power of at least 1 MW, for example of up to 3.75 MW. However, the present disclosure is not limited to MCS charging sockets and charging connectors but also applicable to CCS-1, CCS-2, HPCCV, CHAdeMO standards, for example.

When the charging cable assumes it predefined, or "natural", shape, the charging connector has an orientation which is aligned with the orientation of the charging socket of the electrical vehicle. Typically, the electric pins or contacts of the charging socket and the charging connector, respectively, are orientated approximately horizontal so that the charging connector can be plugged into the charging socket by an approximately horizontal movement. The orientation of the charging connector is understood as rotational orientation with reference to an axis parallel to pins of the charging connector, along which the charging connector is moved in order to be plugged into the charging socket. For ease of description, the (rotational) orientation of the charging connector when the charging cable is in the charging position is referred to as the normal orientation.

In the predefined shape of the charging cable, the charging connector is typically in the charging position, or in a position similar to the charging position, where the charging connector has its normal orientation which is aligned with the orientation of the charging socket. This facilitates insertion of the charging connector into the charging socket since no rotation around the axis along which the charging connector is moved is needed. Thus, the charging connector does not need to be rotated and thus the charging cable does not need to be twisted, or only to a marginal degree, when plugged into the charging socket.

When the charging cable is not in use, the charging connector is in a parking position in which the charging connector is inserted into a connector holder which is provided by and fixed at the support device. Typically, to bring the charging connector from the charging position to the parking position the charging connector is moved by pivoting by which the charging connector, which faced the electric vehicle in the charging position, is rotated away from the electric vehicle towards the connector holder. This results in the charging connector no longer facing the electric vehicle. The pivoting movement may include pivoting about a quarter-turn such as at least 80° or about approximately 90°, or about a half turn such as about approximately 180°.

Although the charging cable can be moved freely in principle, the path along which the charging connector is movable is limited by the free length and the stiffness of the charging cable. For example, the assembly of charging cable and charging connector may be pivoted about 180° about a virtual vertical axis which may be defined by the fastening which fixes the fixing point of the charging cable. Although the charging cable is relatively stiff, the charging connector can be moved with a given freedom. Thus, pivoting about the virtual vertical axis, which may be along the downwardly extending cable portion of the charging cable, should not be interpreted in a mathematical strict sense. This terminology is only used to illustrate the general movement which the charging connector together with the charging cable is subjected to when being moved between the charging position and the parking position.

Pivoting the charging connector, which includes changing its direction from facing towards the electric vehicle to a direction facing into another direction, such as facing away from the electric vehicle, causes the charging cable to be twisted about its fixing point. Due to the stiffness of the charging cable, this twisting causes, for example, the charging connector to be tilted or inclined (rotated) relative to its normal orientation. In the parking position, the charging connector is therefore in an inclined orientation rotated relative to its normal orientation which the charging connector has when in the charging position. Thus, inclined orientation means rotated about an axis parallel to the pins of the charging connector, or inclined relative to a vertical plane.

To accommodate the tilting of the charging connector caused by pivoting the assembly of the charging connector and charging cable, the connector holder is provided such that it allows receiving the charging connector in its inclined (rotated) orientation. The driver, or the user, which moves the charging connector from its charging position into the parking position, does not need to act against the twisting of the charging cable, which causes the charging connector to be inclined, as the charging connector is received by the connector holder in its inclined orientation. This facilitates the handling of the rather stiff and heavy charging cable.

As explained above, the direction of the charging connector changes when moving the charging connector from the charging position to the parking position. This is different to the solutions disclosed in DE 10 2018 112 746 A1 and WO 2022/005281 A1 where the direction of the charging connector essentially remains the same. In both solutions, the charging cable must be bent stronger, i.e. the radius of curvatures of the bend is reduced, when the charging cable is brought into the parking position. On the other hand, the charging cable must be bent apart when the charging cable is moved toward the electric vehicle. Thus, the charging cable is subjected to repeating "folding" and "unfolding" movements.

Different thereto, the charging cable of the electric vehicle charging station as described herein is twisted when the assembly of the charging connector and the charging cable is moved from the charging position to the parking position. The twisting of the charging cable is distributed along the length of the charging cable and therefore does not lead to localised stress as caused by the "folding" and "unfolding" movements. Furthermore, the twisting caused by the pivoting movement usually requires less force than bending the charging cable, so that the handling of the assembly, which includes the charging connector and the charging cable, is improved.

When the charging holder receives the charging connector in its inclined orientation, the charging cable is basically twist-free, because no force has been provided by the user to counteract the twisting of the charging cable which is caused by the pivoting movement. This means that when the charging connector is inserted into the charging holder, there are essentially no or only marginal (counter) torsional forces acting on the charging cable. This would be different if the charging connector were inserted in its normal orientation, since this would require the charging connector to be rotated against the twist of the charging cable. The charging connector can therefore be inserted into and removed from the charging holder more easily.

According to an embodiment, which can be combined with any other embodiment described herein, the connector holder is fixed to the support device in a mounting position which is vertically displaced from a mounting position of the fastening. The mounting position of the connector holder can be lower than the mounting position of the fastening. For example, the fastening is positioned above the connector holder, so that the charging cable forms a "J" shape, with the top end of the "J" being fixed by the fastening. Alternatively, the mounting position of the fastening may be lower than the connector holder. In this case, the charging cable can also form a "J" shape, with the bottom end of the "J" being fixed by the fastening.

In further embodiments, the mounting positions of each of the connector holder and of the fastening can be at the approximately the same level or height such that the charging cable forms a "U" shape.

According to an embodiment, which can be combined with any other embodiment described herein, the connector holder is fixed to the support device in a mounting position which is laterally and vertically displaced from a mounting position of the fastening. The additional lateral offset between the mounting position of the fastening at the mounting position of the charging holder makes it easier to handle the charging cable, as it can be accommodated in its natural curved shape.

According to an embodiment, which can be combined with any other embodiment described herein, the support device is a charging post having a housing with a basement for attaching to the ground, wherein the fastening is mounted to the housing above the connector holder. This configuration provides a compact arrangement of the electric vehicle charging station.

According to an embodiment, which can be combined with any other embodiment described herein, the fastening and the connector holder are mounted at the same side of the housing.

The side of the housing which faces the electric vehicle during normal operation may be referred to as the frontside of the housing. For example, if the fasting and the connector holder are mounted on the front side, the assembly of the charging connector and the charging cable is pivoted by about a half-turn between the charging position, where the charging connector points to the charging vehicle, and the parking position, where the charging connector points to the housing. The half-turn maybe about a vertical axis which passes through the mounting position of the fastening.

For example, if the side of the housing on which the fastening and the connector holder are mounted is a lateral side of the housing (facing sideways relative to the frontside of the housing), the assembly of the charging connector and the charging cable is pivoted by about a quarter-turn between the charging position and the parking position.

According to an embodiment, which can be combined with any other embodiment described herein, the fastening and the connector holder are mounted on different sides of the housing. For example, the mounting position of the charging holder may be located on the frontside of the housing while the mounting position of the fastening may be located on a lateral side of the housing.

According to an embodiment, which can be combined with any other embodiment described herein, the fastening and the connector holder are mounted at opposite sides of the housing. The opposite sides of the housing face away from each other. For example, the mounting position of the fasting may be located on the rear side of the housing while the mounting position of the charging holder is located on the frontside of the housing.

According to an embodiment, which can be combined with any other embodiment described herein, the given position and a given direction of the charging cable is defined by the fastening fixing the fixing point of the charging cable, wherein the fastening is arranged such that the charging cable extends from the fastening in a vertically downward direction and transits into the bend. For example, the given position and the given direction are defined by the position of the fixing point and the direction of the downwardly extending cable portion.

According to an embodiment, which can be combined with any other embodiment described herein, the charging connector is above the lowest point of the bend. Specifically, the charging connector may be hold in its normal orientation by the upwardly or horizontally extending cable portion when the charging cable is in the charging position.

According to an embodiment, which can be combined with any other embodiment described herein, the electric vehicle charging station is a Megawatt Charging System (MCS) charging station, for example with a rated power of at least 1 MW.

According to an embodiment, which can be combined with any other embodiment described herein, the connector holder comprises a receptacle having an internal shape configured for mating with the charging connector in the inclined orientation. When viewed from the frontside, the charging connector may have a symmetric configuration relative to a virtual plane with two primary power (DC) pins symmetrically arranged relative to the virtual plane. The outer shape of the charging connector may resemble a downward-pointing triangle and the virtual plane may dissects the triangle into two substantially symmetrical portions each having a primary power pin. In the normal orientation, the virtual plane is vertical to the ground. In the inclined orientation, when the charging connector is in the parking position, the vertical plane is inclined relative to vertical. This means, that the outer shape, i.e. the triangle, is rotated. The internal shape of the receptacle of the connector holder also resembles a triangle which is rotated or inclined to receive the charging connector with its inclined orientation.

According to an embodiment, which can be combined with any other embodiment described herein, the inclined orientation of the charging connector in the parking position is rotated relative to the normal orientation of the charging connector in the charging position by about 10° to 30° about a horizontal axis, typically by about 15° to 25° about the horizontal axis such as about 20°.

According to an embodiment, which can be combined with any other embodiment described herein, the pivoting movement is about a quarter-turn or about a half-turn about a vertical axis. For example, the pivoting movement may be at least about 80°, such as about 90°. Specifically, when the connector holder is located at a lateral side of the housing, moving the charging connector including the charging cable between the charging position and the parking position may include pivoting by about a quarter-turn. If the charging holder is on the front side of the housing, the charging connector may be moved by about a half-turn between the parking position and the charging position.

According to an embodiment, which can be combined with any other embodiment described herein, the given stiffness of the charging cable is a stiffness in bending radius and in torsional movement. With respect to the charging cable both the bending stiffness as well as the torsional stiffness is of relevance since the interplay of both define the amount about which the charging connector is rotated about its axis when the assembly of the charging cable and the charging connector is pivoted from the charging position to parking position.

As the charging cable may have a bend, with the charging connector being attached to the one (free) end of the charging cable, the portion of the charging cable between the bend and charging connector may be considered as a lever which acts on the cable portion between the bend and the fixing point. When "acting" on the lever, the portion of the charging cable between the bend and the fixing point is twisted. In addition to that, the portion of the charging cable between the bend and the charging connector, i.e. the "lever", inclines when the portion of the charging cable between the bend and the fixing point is twisted due to the pivoting movement.

The mechanical behaviour of the charging cable can be described by Kirchhoffs' rod theory which links bending and torsion of slender structures such as the relatively stiff charging cable.

According to an embodiment of the present disclosure, a method for charging an electric battery of an electric vehicle, by using an electric vehicle charging station as described herein, is provided. The method includes removing the charging connector from the connector holder; bringing the charging connector from the parking position into the charging position by a movement reverse to the pivoting movement causing the charging connector to rotate from the inclined orientation to the normal orientation; and inserting the charging connector into a charging socket of the electric vehicle.

### DRAWINGS

These and other features, aspects, and advantages of the present disclosure will become better understood when the following detailed description is read with reference to the accompanying drawings in which like reference numbers represent like parts throughout the drawings, wherein:
Figure 1 shows an electric vehicle charging station according to an embodiment from a frontside.
Figure 2 shows an electric vehicle charging station from a lateral side.
Figure 3 shows an electric vehicle charging station from a lateral side, with the charging cable being removed for illustration purposes only.
Figure 4 shows the configuration of an MCS charging connector from a front face.
Figures 5A to 5C show 3-dimensional illustrations of a connector holder according to an embodiment.
Figures 6A and 6B show an electric vehicle and an electric vehicle charging station from above for illustrating the pivotal movement between the charging position in Figure 6A and the parking position in Figure 6B, according to an embodiment.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

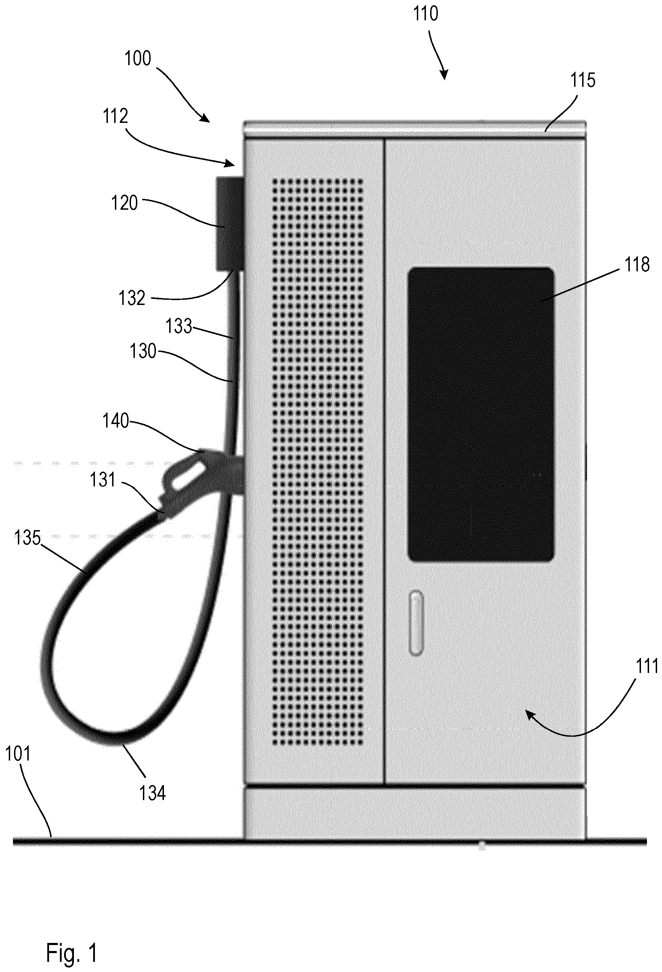

An electric vehicle charging station 100 according to an embodiment is described with reference to Figures 1 to 3. The electric vehicle charging station 100 according to this embodiment includes a charging post 110 forming a support device and having a housing 115 with a basement attached to ground 101. The housing 115 forms the outer shape of the charging post 110.

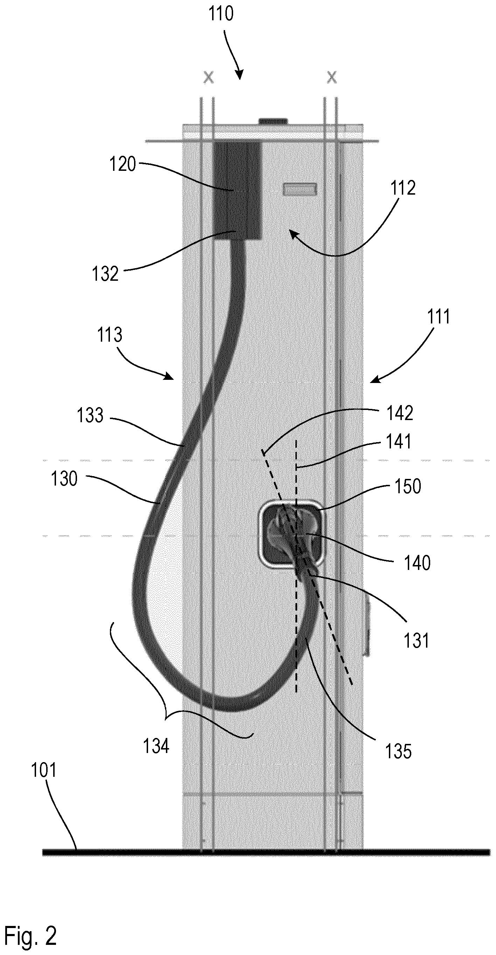

The housing 115 has a frontside 111 with an operating panel 118, which is provided for operating the electric vehicle charging station 100 and the charging process. The housing 115 has two lateral sides, one of which is denoted by 112. A rear side 113, shown in Figure 2, is arranged opposite to the frontside 111.

The electric vehicle charging station 100 is provided with a charging cable 130. The charging cable 130 has a fixing point 132 on one side of the charging cable 130 and one end 131 on the other side of the charging cable 130. The fixing point 132 is attached by a fastening 120 at an upper end of the lateral side 112 of the housing 115. A charging connector 140 is attached to the one end 131 of the charging cable 130.

As shown in Figure 1, the charging cable 130 includes a downwardly extending cable portion 133 extending from the fastening 120 to a bent cable portion 134 and an upwardly extending cable portion 135 extending from the bent cable portion 134 to the one end 131. The downwardly extending cable portion 133 is longer than the upwardly extending cable portion 135 in the present embodiment. The free length of the charging cable 130 is from the fixing point 132 along the extension of the charging cable 130 up to the one end 131.

The charging cable 130 has a given stiffness which is determined by the internal structure of the charging cable 130 and the materials used for the various components of the charging cable 130. A significant contribution to the stiffness is provided by two DC charging wires, which are not shown here. There are also wires which are used for communication between the charging station and the electric vehicle and a protective earth wire. In addition to that, cooling tubes may be integrated into the charging cable for cooling during charging. All these wires and tubes are encapsulated in an insulating material, which also contributes to the overall stiffness of the charging cable 130.

The bent cable portion 134 forms a bend in the charging cable 130 with a predefined curvature. The predefined curvature may be imparted to the charging cable 130 during manufacture.

As shown in Figure 1, the charging connector 140 is plugged into a connector holder 150, shown in Figure 2, which is located on the same lateral side 112 on which the fastening 120 is located. The charging connector 140 thus points to the housing 115, i.e. the direction of the charging connector 140 is perpendicular to the face of the lateral side 112.

As shown in Figure 2, the charging connector 140 has an inclined orientation 142 relative to a normal orientation 141 which is vertical relative to ground 101. The inclined orientation 142 is a result of a twisting of the charging cable 130 when moved from a charging position to a parking position, which is shown in Figures 1 and 2. The inclined orientation 142 is thus inclined or tilted relative to vertical.

In the case of an MCS, the charging post 110 is positioned on the left side of a truck drive-through lane, as the position of an MCS charging socket is standardised on the left side of the truck vehicle.

For charging such an electric vehicle, a user grabs the charging connector 140 and remove it from the connector holder 150. For moving the charging connector 140 towards the electric vehicle the user makes a turn, which may be a quarter-turn as in the embodiment shown in Figures 1 to 3. In the case as illustrated in Figure 2, the charging connector 140 would be pivoted from the direction pointing to the lateral side 112 to a direction pointing away from the frontside 111, where the electric vehicle would be parked. During this movement, the charging cable 130 is twisted about a vertical axis extending through the fastening 120, resulting in a rotation of the upwardly extending cable portion 135 and the charging connector 140, so that the charging connector 140 will be in its normal orientation 141 when pointing towards the electric vehicle.

When the charging cable 130 is not plugged into the charging holder 150 and is only held by the fastening 120, the charging connector 140 moves by itself, or under guidance of the driver, into the charging position, or a position close to it, where the charging connector 140 points towards the electric vehicle. This self-driven movement is caused by the release of the torsional stress which the charging cable 130 was subjected to when the charging connector 140 is inserted into the connector holder 150. The charging connector 140 is also held by the relatively stiff charging cable 130 above the lowest point of the bent cable portion 134 approximately at a height where the charging socket of the electric vehicle is positioned according to the relevant standard. The charging connector 140 is orientated horizontally, i.e. the pins of the charging connector 140 are approximately parallel to ground 101. The "twisting" about the vertical axis when bringing the charging cable 130 from the parking position to the charging position might be described as a "release" of the charging cable 13 since the charging cable 130 returns into its normal shape.

When moving the charging connector 140 from the charging position into the parking position the user twists the charging cable 130 by pivoting the assembly formed by the charging cable 130 and the charging connector 140. This causes the charging connector 140 to be inclined as shown in Figure 2. In the embodiment shown here, the angle between the normal orientation 141 and the inclined orientation 142 is about 20°, and more generally between about 15° and 25°. The angle between the normal orientation 141 and the inclined orientation 142 depends, inter alia, on the extent of the pivoting movement of the assembly formed by the charging cable 130 and the charging connector 140. If the assembly would be pivoted by about a half-turn, the charging cable 130 becomes more twisted, potentially leading to a larger inclination of the charging connector 140.

To limit the inclination, it is beneficial to have the connector holder 150 and the fastening 120 at the same side of the charging post 110, specifically at the lateral side 112. In this case, only a pivotal movement of the assembly formed by the charging cable 130 and the charging connector 140 about a quarter-turn is needed to bring the charging connector 140 from the charging position into the parking position which reduces the force the driver must apply.

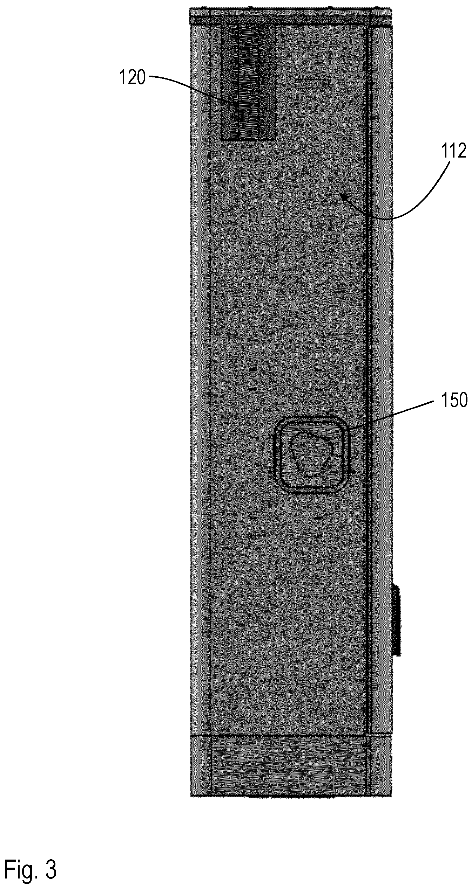

Figure 3 shows the lateral side 112 of the housing 110 without the charging cable 130 and the charging connector 140. The charging holder 150 has an internal shape which is configured to match the external shape of the charging connector 140. As illustrated in Figure 3, the fastening 120 is arranged above the connector holder 150 and laterally displaced to it. This also makes it easier to handle the charging cable 130, as it does not need to be bent strongly.

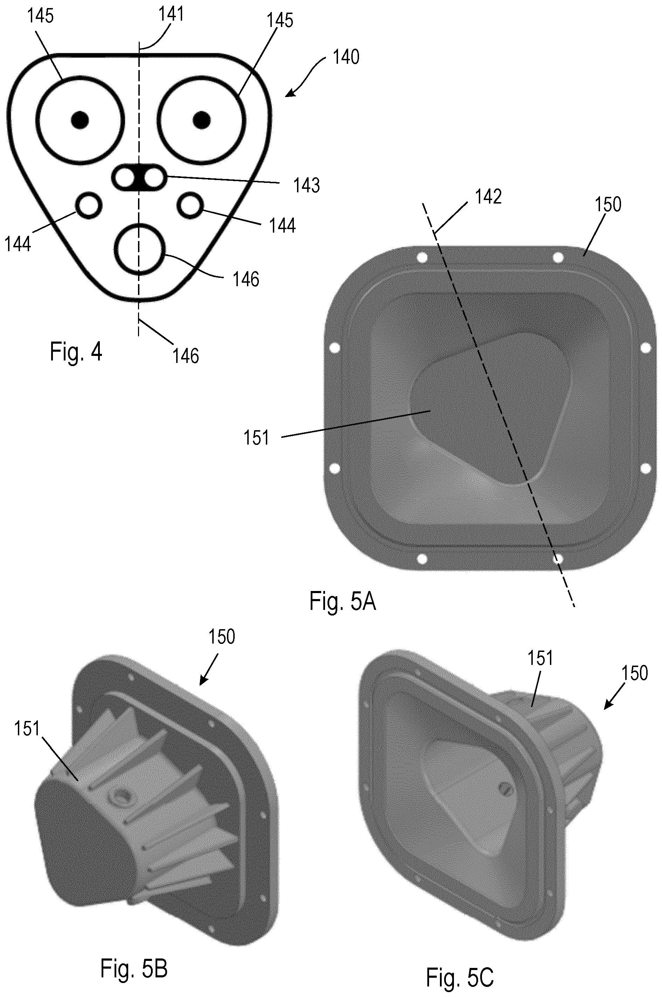

As shown in Figure 3, the internal shape of the charging holder 150 resembles a triangle with rounded corners. The triangle is slightly rotated. This is more clearly shown in Figures 4 and 5A to 5C.

Figure 4 shows a front view of the charging connector 140 according to the MCS standard. However, the invention is not limited to the MCS standard. The charging connector 140 includes two DC charging pins 145 symmetrically arranged relative to a virtual plane 146 which is vertical here and which defines the orientation of the charging connector 140. The charging connector 140 additionally includes communication pins 143 and directional pins 144. The external shape of the charging connector 140 approximates a triangle with large rounded corners. The normal orientation 141 is also indicated. In Figure 4, the virtual plane 146 (symmetry plane of the charging connector 140) is parallel to the normal orientation 141.

A front view of a charging holder 150 is shown in Figure 5A. The charging holder 150 comprises a receptacle 151 having an internal shape that resembles the external shape of the charging connector 140 as shown in Figure 4. As illustrated in Figure 5A, the receptacle 151 is slightly rotated to the left so that its axis of symmetry is inclined. This corresponds to the inclined orientation 142 illustrated in Figure 5A. Thus, when the charging connector 140 is moved into the parking position, the charging connector 140 rotates about a horizontal axis or, in other words, about the axis parallel to the pins 143, 144, 145. The orientation of the charging connector 140, when moved into the parking position, corresponds to the inclined position of the receptacle 151 of the charging holder 150 so that the user can simply insert the charging connector 140 into the charging holder 150 without being required to force the charging connector 140 into the normal orientation. This facilitates handling of the charging cable 130 and reduces the stress exerted on the charging cable 130.

Figures 5B and 5C illustrate 3-dimensional views of the charging holder 150 with an integrated receptacle 151.

In the above embodiments, the pivoting movement of the assembly comprising the charging cable 130 and the charging connector 140 includes a rotation by about a quarter-turn. When the fastening 120 for mounting the fixing point 132 of the charging cable 130 and the connector holder 150 are both positioned on the front side 111 of the housing 115, the pivoting movement of the assembly comprising the charging cable 130 and the charging connector 140 includes a rotation by about a half-turn. As the charging cable 130 is stronger twisted by such a half-turn relative to a quarter-turn, the charging connector 140 is stronger inclined when moved from the charging position into the parking position. In this case, the connector holder 150 is adapted to accommodate the stronger inclined charging connector 140.

The amount by which the charging connector 140 is inclined when brought from the charging position into the parking position thus may depend on the position of the fastening 120 and the position of the connector holder 150.

In the above embodiments, the fastening 120 is arranged above the level of the connector holder 150, so that the charging cable 130 forms a "J". It would also be possible that the fastening 120 and the connector holder 150 are positioned at the approximate same level. In this case, the charging cable 130 forms a "U".

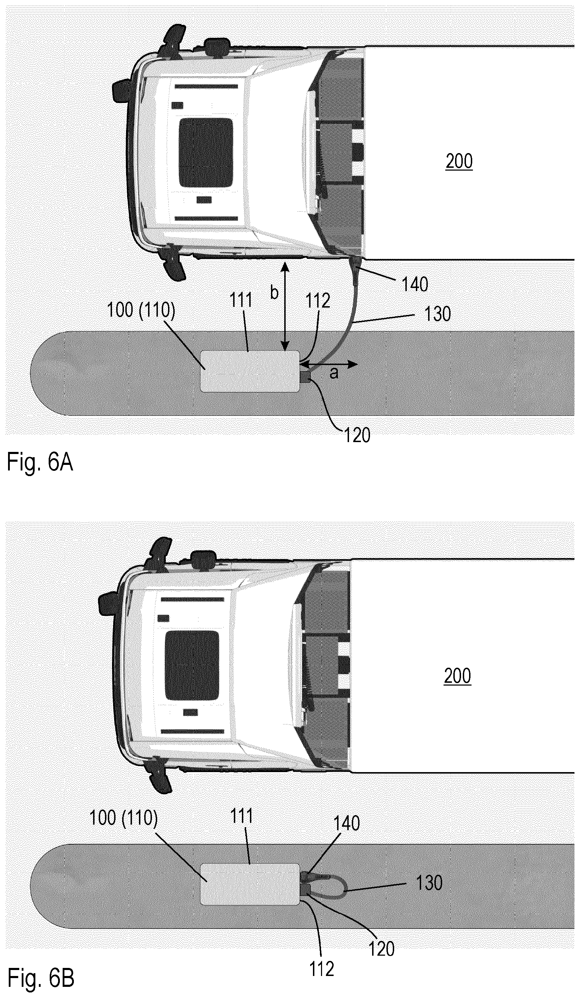

Figures 6A and 6B illustrates the charging position (Figure 6A) and the parking position (Figure 6B). The electric vehicle charging station 100 is positioned on the left side of the drive-through lane for the electric vehicle 200. The charging socket is on the left side of the electric vehicle 200. The charging holder 150 and the fastening 120 are both arranged on the lateral side 112 of the electric vehicle charging station 100. The electric vehicle 200 may be parked such that the charging socket of the electric vehicle 200 may be slightly laterally before the lateral side 112 of the electric vehicle charging station 100, for example by about 0.7 m (distance a). The distance between the front side 111 and the electric vehicle 200 may be about 0.9 m (distance b).

In the parking position (Figure 6B), the charging connector 140 is inserted in the charging holder 150 (not shown here) so that the charging connector "points" to the lateral side 112.

For charging the electric vehicle 200, the driver grabs the charging connector 140, removes it from the charging holder 150, makes a quarter-turn so that the charging connector 140 points towards electric vehicle 200, and plugs the charging connector 140 into the charging socket of the electric vehicle 200. The charging connector 140 is thus moved into the charging position (Figure 6A). Due to the quarter-turn, the charging connector 140 returns into its normal orientation 141 as described in connection with Figure 2.

After charging, the driver unplugs the charging connector 140, makes a quarter-turn in the opposite direction and inserts the charging connector 140 into the connector holder 150 arranged at the lateral side 112 of the electric vehicle charging station 100. Due to this quarter-turn, the charging cable 130 is twisted resulting the charging connector 140 to be inclined relative to its normal orientation 141. When in the parking position (Figure 6B), the charging connector 140 has an inclined orientation 142 as explained in connection with Figure 2.

Due to the charging holder 150 having a configuration which allows the charging connector 140 to be received in the inclined orientation, the driver can easily insert the charging connector 140 into the charging holder 150 without required to apply a force to counteract the inclination caused by the twisting.

### REFERENCE LIST

- 100: electric vehicle charging station
- 101: ground
- 110: support device
- 111: frontside
- 112: lateral side
- 113: rear side
- 115: housing
- 118: operating panel
- 120: fastening
- 130: charging cable
- 131: one end
- 132: fixing point
- 133: downwardly extending cable portion
- 134: bent cable portion
- 135: upwardly extending cable portion / horizontally extending cable portion
- 140: charging connector
- 141: normal orientation
- 142: inclined orientation
- 143: communication pins
- 144: directional pins
- 145: DC charging pins
- 146: virtual plane
- 150: connector holder
- 151: receptacle
- 200: electric vehicle

## Claims

1. Electric vehicle charging station (100) for charging an electric battery of an electric vehicle, comprising:
a charging cable (130) having a charging connector (140) at one end (131) of the charging cable (130) and a fixing point (132) spaced from the one end (131) of the charging cable (130), the charging connector (140) being configured for mating with a charging socket of an electric vehicle, the charging cable (130) having a given stiffness and forming a predefined bend between the fixing point (132) and the one end (131); and
a support device (110) having
a fastening (120) fixing the charging cable (130) at the fixing point (132) in a given position so that, under the influence of the gravity and together with the predefined bend (134) and the given stiffness, the charging connector (140) is in a predetermined charging position which facilitates insertion of the charging connector (140) into the charging socket of an electric vehicle, and
a connector holder (150) for receiving the charging connector (140) when the charging connector (140) is in a parking position,
wherein the charging connector (140) is movable from the charging position into the parking position by a pivoting movement which causes a torsion of the charging cable (130) bringing the charging connector (140) in an inclined orientation (142) relative to a normal orientation (141) of the charging connector (140) in the charging position, wherein the connector holder (150) is configured to receive the charging connector (140) in the inclined orientation (142).

2. Electric vehicle charging station (100) according to claim 1, wherein the connector holder (150) is fixed to the support device (110) in a mounting position which is vertically displaced from a mounting position of the fastening (120).

3. Electric vehicle charging station (100) according to claim 1, wherein the connector holder (150) is fixed to the support device (110) in a mounting position which is laterally and vertically displaced from a mounting position of the fastening (120).

4. Electric vehicle charging station (100) according to any of the previous claims, wherein the support device (110) is a charging post having a housing (115) with a basement for attaching to the ground (101), wherein the fastening (120) is mounted to the housing (115) above the connector holder (150).

5. Electric vehicle charging station (100) according to claim 4, wherein the fastening (120) and the connector holder (150) are mounted at the same side of the housing (115), such as at a lateral side (112) of the housing (115).

6. Electric vehicle charging station (100) according to claim 4, wherein the fastening (120) and the connector holder (150) are mounted at different sides of the housing (115).

7. Electric vehicle charging station (100) according to claim 4, wherein the fastening (120) and the connector holder (150) are mounted at opposite sides of the housing (115).

8. Electric vehicle charging station (100) according to any of the previous claims, wherein the given position and a given direction of the charging cable (130) is defined by the fastening (120) fixing the fixing point (132) of the charging cable (130), wherein the fastening (120) is arranged such that the charging cable (130) extends from the fastening (120) in a vertically downward direction and transits into the bend (134).

9. Electric vehicle charging station (100) according to claim 8, wherein the charging connector (140) is above the lowest point of the bend (134).

10. Electric vehicle charging station (100) according to any of the previous claims, wherein the electric vehicle charging station (100) is an MCS charging station.

11. Electric vehicle charging station (100) according to any of the previous claims, wherein the connector holder (150) comprises a receptacle having an internal shape configured for mating with the charging connector (140) in the inclined orientation (142).

12. Electric vehicle charging station (100) according to any of the previous claims, wherein the inclined orientation (142) of the charging connector (140) in the parking position is rotated relative to the normal orientation (141) of the charging connector (140) in the charging position by 10° to 30° about a horizontal axis, preferably by 15° to 25° about the horizontal axis, more preferably by about 20°.

13. Electric vehicle charging station (100) according to any of the previous claims, wherein the pivoting movement is about a quarter-turn or about a half-turn about a vertical axis.

14. Electric vehicle charging station (100) according to any of the previous claims, wherein the given stiffness of the charging cable (130) is a stiffness in bending radius and in torsional movement.

15. Method for charging an electric battery of an electric vehicle by using an electric vehicle charging station according to any of the previous claims, comprising:
removing the charging connector (140) from the connector holder (150);
bringing the charging connector (140) from the parking position into the charging position by a movement reverse to the pivoting movement causing the charging connector (140) to rotate from the inclined orientation (142) to the normal orientation (141); and
inserting the charging connector (140) into a charging socket of the electric vehicle.

## Amended claims

### Amended claims in accordance with Rule 137(2) EPC.

1. Electric vehicle charging station (100) for charging an electric battery of an electric vehicle, comprising:
a charging cable (130) having a charging connector (140) at one end (131) of the charging cable (130) and a fixing point (132) spaced from the one end (131) of the charging cable (130), the charging connector (140) having pins and being configured for mating with a charging socket of an electric vehicle, the charging cable (130) having a given stiffness and forming a predefined bend between the fixing point (132) and the one end (131); and
a support device (110) having
a fastening (120) fixing the charging cable (130) at the fixing point (132) in a given position so that, under the influence of the gravity and together with the predefined bend (134) and the given stiffness, the charging connector (140) is held by the charging cable (130) in a predetermined charging position which facilitates insertion of the charging connector (140) into the charging socket of an electric vehicle, wherein the charging connector (140) assumes a normal orientation in the charging position, wherein the orientation of the charging connector (140) is defined as rotational orientation with reference to an axis parallel to the pins of the charging connector (140), and
a connector holder (150) for receiving the charging connector (140) when the charging connector (140) is in a parking position,
wherein the charging connector (140) is movable from the charging position into the parking position by a pivoting movement which causes a torsion of the charging cable (130) bringing the charging connector (140) in an inclined orientation (142) relative to the normal orientation (141) of the charging connector (140) in the charging position, wherein in the inclined orientation the charging connector (140) is rotated about the axis parallel to the pins of the charging connector relative to the normal orientation, wherein the connector holder (150) is configured to receive the charging connector (140) in the inclined orientation (142).

2. Electric vehicle charging station (100) according to claim 1, wherein the connector holder (150) is fixed to the support device (110) in a mounting position which is vertically displaced from a mounting position of the fastening (120).

3. Electric vehicle charging station (100) according to claim 1, wherein the connector holder (150) is fixed to the support device (110) in a mounting position which is laterally and vertically displaced from a mounting position of the fastening (120).

4. Electric vehicle charging station (100) according to any of the previous claims, wherein the support device (110) is a charging post having a housing (115) with a basement for attaching to the ground (101), wherein the fastening (120) is mounted to the housing (115) above the connector holder (150).

5. Electric vehicle charging station (100) according to claim 4, wherein the fastening (120) and the connector holder (150) are mounted at the same side of the housing (115), such as at a lateral side (112) of the housing (115).

6. Electric vehicle charging station (100) according to claim 4, wherein the fastening (120) and the connector holder (150) are mounted at different sides of the housing (115).

7. Electric vehicle charging station (100) according to claim 4, wherein the fastening (120) and the connector holder (150) are mounted at opposite sides of the housing (115).

8. Electric vehicle charging station (100) according to any of the previous claims, wherein the given position and a given direction of the charging cable (130) is defined by the fastening (120) fixing the fixing point (132) of the charging cable (130), wherein the fastening (120) is arranged such that the charging cable (130) extends from the fastening (120) in a vertically downward direction and transits into the bend (134).

9. Electric vehicle charging station (100) according to claim 8, wherein the charging connector (140) is above the lowest point of the bend (134).

10. Electric vehicle charging station (100) according to any of the previous claims, wherein the electric vehicle charging station (100) is a Megawatt Charging System charging station.

11. Electric vehicle charging station (100) according to any of the previous claims, wherein the connector holder (150) comprises a receptacle having an internal shape configured for mating with the charging connector (140) in the inclined orientation (142).

12. Electric vehicle charging station (100) according to any of the previous claims, wherein the inclined orientation (142) of the charging connector (140) in the parking position is rotated relative to the normal orientation (141) of the charging connector (140) in the charging position by 10° to 30° about a horizontal axis, preferably by 15° to 25° about the horizontal axis, more preferably by about 20°.

13. Electric vehicle charging station (100) according to any of the previous claims, wherein the pivoting movement is about a quarter-turn or about a half-turn about a vertical axis.

14. Electric vehicle charging station (100) according to any of the previous claims, wherein the given stiffness of the charging cable (130) is a stiffness in bending radius and in torsional movement.

15. Method for charging an electric battery of an electric vehicle by using an electric vehicle charging station according to any of the previous claims, comprising:
removing the charging connector (140) from the connector holder (150);
bringing the charging connector (140) from the parking position into the charging position by a movement reverse to the pivoting movement causing the charging connector (140) to rotate from the inclined orientation (142) to the normal orientation (141); and
inserting the charging connector (140) into a charging socket of the electric vehicle.
